# EUROPEAN PATENT SPECIFICATION

(11) **EP 4 052 166 B1**
(45) Date of publication and mention of the grant of the patent: **25.11.2026**
(21) Application number: 20793678.2
(22) Date of filing: 20.10.2020
(51) Int. Cl.: G06V 10/94, G06V 40/16, G06F 21/32

(54) **FACE RECOGNITION DEVICE AND METHOD PROVIDING PRIVACY**
GESICHTSERKENNUNGSVORRICHTUNG UND VERFAHREN ZUR BEREITSTELLUNG VON DATENSCHUTZ
DISPOSITIF DE RECONNAISSANCE FACIALE ET PROCÉDÉ ASSURANT LA CONFIDENTIALITÉ

(30) Priority: 28.10.2019 GB 201915575
(43) Date of publication of application: 07.09.2022
(73) Proprietor: Eaton Intelligent Power Limited, Dublin 4 (IE)
(72) Inventor: OKSANEN OSKARI, Janne, 170 00 Praha 7 (CZ)
(74) Representative: Collingwood-Pierce, Alexandra Isobel Seymour
(86) International application number: PCT/EP2020/079501
(87) International publication number: WO 2021/083742

(56) References cited:
- CN-A- 109 104 274
- CN-A- 109 543 569
- CN-A- 109 614 903

## Description

### TECHNICAL FIELD

The invention relates to a face recognition device, which comprises a housing, a camera within the housing and a processor within the housing, which is connected to the camera. Furthermore, the processor is capable of running a face recognition process based on face model data stored in a memory in the processor or in a memory connected to the processor and based on image data captured by the camera. Finally, the face recognition device comprises a data interface within the housing, which is connected to the processor or which is part of the processor. The data interface comprises a first data interface function, which is provided for retrieving said face model data, and a second data interface function, which is provided for transmitting an identity associated with the recognized face. The invention also relates to a building, which comprises a plurality of face recognition devices of the above kind. Finally, the invention relates to a method for recognizing faces by means of a face recognition device of the above kind, wherein the method comprises the steps of retrieving face model data, capturing an image of a face, running a face recognition process based on face model data and based on image data captured by the camera and sending an identity associated with the recognized face.

### BACKGROUND ART

A face recognition arrangement for face recognition and a face recognition method are generally known from US 9,497,202 B1. Here a computer receives an input including a face recognition query and a digital image of a face. The computer identifies a target user associated with a facial signature in a first database based at least in part on a statistical correlation between a detected facial signature and one or more facial signatures in the first database. The computer extracts a profile of the target user from a second database. The profile of the target user may include one or more privacy preferences. The computer generates a customized profile of the target user. The customized profile may omit one or more elements of the profile of the target user based on the one or more privacy preferences and/or a current context. Although US 9,497,202 B1 in principle addresses privacy concerns, there are a lot of possibilities for unauthorized people to attack the face recognition arrangement and to obtain image data and/or face model data or even to change said data.

CN 109 614 903 A discloses an edge-computing face recognition device that locally captures images and compares them against stored biometric templates to authenticate users without relying on continuous server processing.

### DISCLOSURE OF INVENTION

The invention is defined by the appended claims.

On the above grounds, the problem of the invention is to provide an improved face recognition device, an improved building as well as an improved method for recognizing faces. In particular, privacy shall be raised to a higher/better level.

The problem of the invention is solved by a face recognition device as disclosed in the opening paragraph, wherein
A) the first data interface function is a pure write function without providing read access from outside of the face recognition device or can be switched on and off and
B1) the data interface is permanently disconnected from the camera and any memory for storing the image data for storing the image data or
B2) the data interface comprises a third data interface function, which provides read access to the camera or to a memory for storing image data captured by the camera and which can be switched on and off.

That means the face recognition device comprises the options A and B1, or it comprises the options A and B2. Note that the existence of a memory for storing the image data is no necessary condition, and a memory for storing the image data may also be omitted.

The problem of the invention is also solved by a building as disclosed in the opening paragraph, comprising a plurality of fixedly installed face recognition devices of the above kind.

Finally, the problem of the invention is solved by a method as disclosed in the opening paragraph, comprising the steps of:
a) retrieving face model data by the first data interface function,
b) capturing an image of a face by the camera,
c) running a face recognition process based on the face model data and based on image data captured by the camera in the processor and
d) sending an identity associated with the recognized face by the second data interface function, wherein
steps b) and c) are performed within the face recognition device (in particular within its housing).

In particular, steps b) and c) can be performed exclusively within the (housing of the) face recognition device. In other words, image data is processed (exclusively) within the face recognition device (in particular within its housing).

By the above measures, privacy can be improved compared to known systems what is very important in applications in public space or semi-public space (e.g. in premises) but also in home automation systems. To do so, the process of face recognition is done locally at the "edge" of the network, i.e. within the face recognition device. Image data is not stored at all or is prevented from being accessed from the outside. In addition, face model data is prevented from unauthorized access as well. Thus, the invention in particular provides a face recognition device, which in view of the functions necessary for face recognition is self-contained and because of its closed shell can safely be operated in a space, which is highly vulnerable for hacker attacks.

Arranged "within the housing" in the context of the invention does not necessarily mean, but can mean that the part in question is completely arranged within the housing. It is also possible, that the part in question partially reaches out of the housing. For example, the camera and the data interface may reach beyond the housing walls as the have a transmitting or receiving connection to the outside. The processor usually is completely arranged within the housing, and at least the part processing the image data is completely arranged within the housing. Accordingly, image data is processed "exclusively within" the (housing of the) face recognition device. "Exclusively within the housing" in the above context in particular means completely within the housing.

A "data interface function" is a function of the data interface allowing data communication in a particular way. The first data interface function is for data communication related to face model data, the second data interface function is for data communication related to a person's identity and the third data interface function is for data communication related to image data. The functions may be embodied as separate hardware sections of the data interface, or two or more data interface functions may be functional parts of a single hardware section of the data interface. The data interface may also be part of the processor.

Further advantageous embodiments are disclosed in the claims and in the description as well as in the figures.

In an advantageous embodiment, the face recognition device comprises a physical hardware switch, which is provided for switching on and off the first data interface function and/or the third data interface function. In this way, a functional state of the first data interface function and/or the third data interface function cannot remotely be changed by unauthorized persons. For example, the switch may be arranged on or in the housing of the face recognition device in a way that it is accessible from the outside. The switch may also be arranged within the housing so that it is only accessible when the housing is opened. In a further advantageous embodiment, the housing is secured by means of a tamper contact. In case the housing is opened by unauthorized persons, an alarm is output (in particular an alarm message is sent) by the face recognition device. Although the above embodiment is advantageous, the first data interface function and/or the third data interface function may also be switched on and off remotely, for example by sending a corresponding command to the face recognition device by means of wired or wireless communication.

It is also advantageous if a control line of the data interface and/or a data line of the data interface is physically closed in an ON-state of the physical hardware switch and physically disconnected in an OFF-state of the physical hardware switch. For example, the switch can be arranged in a data line necessary for data communication to enable data transfer in the ON-state of the switch and to physically disconnect said data to disable data transfer in the OFF-state of the switch. The very same counts for the control line of the data interface.

In a very advantageous embodiment of the face recognition device, at least the second data interface function is based on a proprietary / non-standardized transmission protocol. In this way, the identity of a detected person cannot be retrieved by standard technology. For the same reason, also the first data interface function may be based on a proprietary / non-standardized transmission protocol. In this way, the face model data (and thus the link between face characteristics and the identity associated therewith) cannot be retrieved or changed by standard technology. Moreover, the third data interface function may be based on a proprietary / non-standardized transmission protocol. In this way, the image data cannot be retrieved or changed by standard technology. The possibilities for a potential attack are substantially limited thereby. Standard technology for example involves devices working based on a WLAN standard (wireless local area network) or based on the Internet Protocol.

Beneficially, the housing of the face recognition device has a volume of less than 2.000 cm³. Accordingly, the face recognition device can be easily installed within a building or in public space.

In a further advantageous embodiment, step a) is executed in a training mode of the face recognition device, whereas the steps b) to d) are executed in an identification mode of the face recognition device, wherein
- in case that the first data interface function can be switched on and off, the first data interface function is switched on in the training mode and switched off in the identification mode and
- in case that the third data interface function can be switched on and off, the third data interface function is switched on in the training mode and switched off in the identification mode.

Hence, face model data can be written (and be read as the case may be) in training mode, but cannot be tampered or read in identification mode. The same counts for the image data, which cannot be read in identification mode, but just in training mode. Generally, "training mode" and "identification mode" can be considered to be different operating modes of the face recognition device or to be different operating states of the face recognition device.

Beneficially, the face recognition device comprises a physical hardware switch, which is provided for switching to training mode or identification mode. This switch may be the same switch, which is also used to switch on and off the first data interface function and/or the third data interface function. But, also a separate switch can be used to switch to training mode or identification mode. By the above measures, the operating mode of the face recognition device cannot remotely be changed by unauthorized persons. For example, the switch again may be arranged on or in the housing of the face recognition device in a way that it is accessible from the outside. The switch may also be arranged within the housing so that it is only accessible when the housing is opened. In a further advantageous embodiment, the housing is secured by means of a tamper contact. In case the housing is opened by unauthorized persons, an alarm is output (in particular an alarm message is sent) by the face recognition device. Although the above embodiment is advantageous, the operating mode of the face recognition device may also be changed remotely, for example by sending a corresponding command to the face recognition device by means of wired or wireless communication.

Generally, training mode can be used to capture images, which are needed for generating the face model data, and/or for retrieving the face model data. Images for generating the face model data are beneficially captured in the mounted state of the face recognition device, i.e. when it is installed in the place, in which later on identification takes place. So, when the face recognition device is mounted in its desired position, training mode can be started in this use case. For example, this can be done by switching it into training mode remotely, by use of a physical hardware switch of the face recognition device or by attaching a data cable or a storage device to make sure it cannot be done without the attention of the owner of the face recognition device. In training mode, the camera can capture images of faces of one or more people moving through the range of the camera from different distances and angles. This provides the benefit of capturing images for the face model data under exactly the same conditions (same angle, distance, lighting, sensor) under the identification mode later on runs. Hence, identification is done very accurately in a reliable way then.

Once the camera has captured a sufficiently large set of training images in training mode, the image data is fed into a training algorithm which in return yields the face model data, which is used in identification mode. The face model data usually is generated outside of the face recognition device by a computing device that provides enough computing power to generate the face model data within short time. For example, said computing device can be a mobile computer, which is connected to the face recognition device by means of a cable or by a short-range wireless connection. The images for generating the face model data can also be stored in a storage device connected to the face recognition device (e.g. on a USB-stick) and loaded into a desktop computer, or the images for generating the face model data can be uploaded to a server connected via the Internet. Said computing devices in turn can generate the face model data, which is then uploaded into the face recognition device. Once, the face model data is stored in the face recognition device, identification mode can be started to put the face recognition device into normal operation. Of course, the face model data does not only comprise face characteristics, but also the link between face characteristics and the identity associated therewith.

It should be noted that having the face recognition device installed in its desired position is no necessary condition for running the training mode. The steps presented above can also be performed in another location. It is also possible that another camera different from the one installed in the face recognition device is used to capture the image data for generation of the face model data. For example, a camera connected to or built into the computing device, which generates the face model data, can be used.

Generally, if there is a training mode and an identification mode, step a) takes place in training mode, whereas steps b) to d) take place in identification mode. Moreover, steps b) to d) are continuously repeated in identification mode.

It should also be noted that to provide privacy, image data can be processed exclusively within the face recognition device in identification mode, in particular within the housing of the face recognition device, whereas image data may leave the face recognition device in training mode.

In another advantageous embodiment, image data is discarded immediately after the face recognition process has been ended or immediately after the identity associated with the recognized face has been sent. "Immediately" in the above context in particular means "within less than 1 second". Accordingly, an unauthorized person can just retrieve image data within a very small time period what substantially limits the possibilities for a potential attack.

Beneficially, a message related to an unknown identity is sent in case the face recognition process ends negatively (i.e. if no matching identity is found). In this way, the user of the face recognition device is notified that an unknown person is detected.

In a further advantageous embodiment, the identity of a detected person is sent in encrypted form, or an intermediate identity associated with the recognized face but being different from the real identity is sent. An "intermediate identity" does not contain information directly leading to the identified person. That means, an intermediate identity in particular does not contain the name, gender, age, home location, work location of the identified person. Instead, an intermediate identity can be an ID-number or an ID-symbol (which may comprise numerals, characters as well as special characters) associated with the recognized face. The link between this intermediate identity and the real identity of the recognized person can be stored in a separate database in a receiving device out of the access range of persons intercepting data sent by the face recognition device. Alternatively, the receiving device can have the key to decrypt the encrypted identity and to get the real identity of the detected person. So, neither the face recognition device, nor the receiving device has complete information about the face and the linked real identity what makes the system particularly safe. Hence, even if someone intercepts the sent identity in an abusive way, he still has no knowledge about the real identity of the recognized person in case that the identity of a detected person is sent in encrypted form, or in case that an intermediate identity is sent. A hacker had to hack both the face recognition device (or its data communication) and the receiving device to obtain the link between a captured face and the linked real identity what however is unlikely to happen. Of course, both proposed alternatives can be combined so that an intermediate identity can be sent in encrypted form by the face recognition device. Accordingly, the receiving device has to have both the key and the database in this case, or there are two devices chained to even make an attack more complicated. In this case a first receiving device has the key and a second receiving device has the database. The real identity of a detected person is unveiled just at the end of the chain.

Finally, it is advantageous if identity related data is the only data sent by the face recognition device. Accordingly, an unauthorized person cannot retrieve data beyond identity related data. So, there are just very limited possibilities for a potential attack.

### BRIEF DESCRIPTION OF DRAWINGS

The invention now is described in more detail hereinafter with reference to particular embodiments, which the invention however is not limited to.
- Fig. 1: shows a schematic view of an exemplary embodiment of a face recognition device and
- Fig. 2: shows a schematic view of a building with a plurality of face recognition devices.

### DETAILED DESCRIPTION

Generally, same parts or similar parts are denoted with the same/similar names and reference signs. The features disclosed in the description apply to parts with the same/similar names respectively reference signs. Indicating the orientation and relative position (up, down, sideward, etc.) is related to the associated figure, and indication of the orientation and/or relative position has to be amended in different figures accordingly as the case may be.

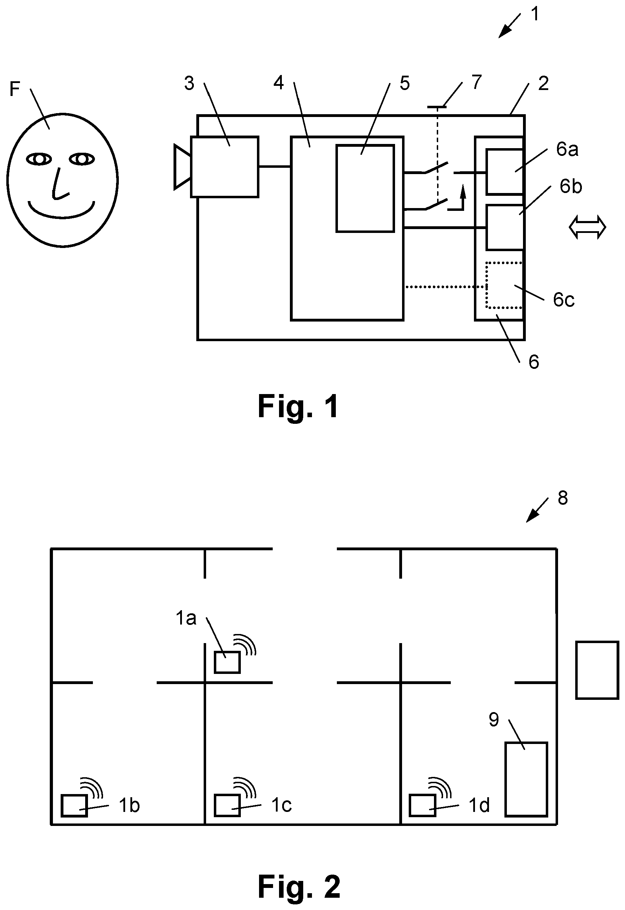

Fig. 1 shows a schematic view of an exemplary embodiment of a face recognition device 1, which comprises a housing 2, a camera 3 within the housing 2, a processor 4 within the housing 2, which is connected to the camera 3, and a data interface 6 within the housing 2, which is connected to the processor 4. The processor 4 is capable of running a face recognition process based on face model data stored in a memory 5 in the processor 4 and based on image data captured by the camera 3. The data interface 6 comprises a first data interface function 6a, which is provided for retrieving said face model data, and a second data interface function 6b, which is provided for transmitting an identity associated with the recognized face F. Note that data transmission is indicated by an arrow in Fig. 1.

The function of the face recognition device 1 is as follows:
In a first step a), face model data is retrieved by means of the first data interface function 6a and stored in the memory 5. This face model data comprises information about characteristics of a face F, e.g. one or more of: shape of the nose, shape of the mouth, color of eyes, color of hair, etc. and identity information linked to said face F, e.g. one or more of: name, gender, age, home location, work location, ID-number, ID-symbol, etc. Face model data can be loaded into the face recognition device 1 during a set up procedure and can be updated regularly or if needed.

Face model data can comprise pre-trained neural networks and data and/or executable code according to other face recognition technology. The process of face recognition is not explained in detail here as these technologies are known per se.

The images used for generation of the face model data can be captured by the camera 3 of the face recognition device 1 or by another camera. It is useful to take the pictures from the position where the face recognition device 1 later on is used for identifying people. So, beneficially the camera 3 (or another camera) captures images of faces of one or more people moving through the capturing range from different distances and angles. This provides the benefit of capturing face model data under exactly the same conditions (same angle, distance, lighting, sensor) under the identification takes place later on. Hence, identification is done very accurately in a reliable way then. If the images used for generation of the face model data are captured by the camera 3, the face recognition device 1 can comprise an optional third data interface function 6c (drawn in dotted lines in Fig. 1), which provides read access to the camera 3 or to a memory 5 for storing image data captured by the camera 3 and which can be switched on and off. To get the image data out of the face recognition device 1, the third data interface function 6c is switched on. If image data shall be kept inside of the face recognition device 1, the third data interface function 6c is switched off.

Once a sufficiently large set of training images has been captured, the image data is fed into a training algorithm, which in return yields the face model data which is used for identification later on.

For example, face model data can be generated in a mobile computing device (e.g. in a laptop computer), in a desktop computer or in a computer server. Images needed for generating the face model data can be loaded into one of the above computing devices by wired data transmission, wireless data transmission or by physically carrying a storage device (e.g. an USB stick) from the face recognition device 1 to said computing device.

Once, the face model data has been loaded into the face recognition device 1 in step a), the face recognition device 1 can be put into normal operation, i.e. identification can be started. During normal operation, the camera 3 captures images, for example continuously or triggered by a movement sensor. If a person gets into the range of the camera 3, an image of the face F of this person is captured by the camera in a step b). Next, a face recognition process is executed based on the face model data stored in the memory 5 and based on image data captured by the camera 3 in a step c). If there is a match in the face model data, an identity associated with the recognized face F is sent via the second data interface function 6b in a step d). If there is no match, a message related to an unknown identity can be sent.

To provide privacy, image data is processed within the face recognition device 1, in particular within the housing 2 of the face recognition device 1 and in particular exclusively within the face recognition device 1. So, image data does not have to leave the face recognition device 1 for doing the face recognition. In another beneficial variant of the proposed method, the second data interface function 6b can be based on a proprietary / non-standardized transmission protocol. In this way, the identity of a detected person cannot be retrieved by standard technology during data transmission. For the same reason also the first data interface function 6a may be based on a proprietary / non-standardized transmission protocol. In this way, the face model data cannot be written/retrieved by standard technology either. The very same also counts for the third data interface function 6c, which can be based on a proprietary / non-standardized transmission protocol as well. In this way, the image data cannot be retrieved by standard technology either. Standard technology for example involves devices working based on a WLAN standard (wireless local area network) or based on the Internet Protocol for example.

It is also possible to send the identity of a detected person in encrypted form or to simply send an ID-number or in general an ID-symbol (which may comprise numerals, characters as well as special characters) associated with the recognized face. So, even if someone intercepts the sent identity in an abusive way, he still has no knowledge about the real identity of the recognized person. The link between this intermediate identity and the real identity of the recognized person can be stored in a separate database out of the access range of persons intercepting data sent by the face recognition device.

To further improve privacy, image data can be discarded immediately (e.g. less than 1 second) after the face recognition process has been ended or immediately (e.g. less than 1 second) after the identity associated with the recognized face F has been sent. In another beneficial embodiment of the disclosed method, identity related data is the only data sent by the face recognition device 1. Accordingly, an unauthorized person cannot retrieve data beyond identity related data. So, there are just very limited possibilities for a potential attack.

Generally, the first data interface function 6a can be designed as a pure write function without providing read access from outside of the face recognition device 1. Hence, face model data can just be written, but cannot be read then. In addition, the data interface 6 can be permanently disconnected from the camera 3 and any memory 5 for storing the image data (if there is a memory 5 for storing the image data at all). Hence, image data cannot be read either then.

It is also possible to provide a dedicated training mode for the face recognition device 1 to perform step a), i.e. to retrieve face model data, and to provide a dedicated identification mode for the face recognition device 1 to (continuously) perform steps b) to d). Dependent on which tasks are to be performed, the user of the face recognition device 1 can choose the desired mode.

In case that the first data interface function 6a is switchable, the first data interface function 6a is switched on in the training mode and switched off in the identification mode. Hence, face model data can be written (and be read as the case may be) in training mode, but cannot be tampered or read in identification mode. In addition, in case that the third data interface function 6c is switchable, the third data interface function 6c is switched on in the training mode and switched off in the identification mode, too. Hence, image data cannot be read in identification mode, but just in training mode.

In an advantageous embodiment, the face recognition device 1 can comprise an optional physical hardware switch 7 being provided for switching on and off the first data interface part 6a and/or the third data interface part 6c. In this way, a functional state of the first data interface part 6a and/or the third data interface part 6c cannot remotely be changed by unauthorized persons.

Generally, said physical hardware switch 7 can be used to switch to training mode in its ON-state and to identification mode in its OFF-state.

Beneficially, a control line of the data interface 6 and/or a data line of the data interface 6 is physically closed in an ON-state of the physical hardware switch 7 and physically disconnected in an OFF-state of the physical hardware switch 7. For example, the switch 7 can be arranged in a line necessary for data communication and allow data communication in its ON-state and to physically disconnect said line to disable data transfer in its OFF-state like this is schematically depicted for the first data interface function 6a in Fig. 1.

In Fig. 1, the switch 7 moreover is embodied as a two-pole switch and is used to switch a positive voltage to the processor 4 to signal that the face recognition device 1 is switched into training mode (or into identification mode, if the switch 7 is opened). Of course, the switch 7 can also be used in a way that a negative voltage or ground and/or the OFF-state means training mode. Although the embodiment shown in Fig. 1 is advantageous, also a separate switch can be used to signal to the processor 4 that the face recognition device 1 is switched to training mode or to identification mode.

For example, the switch 7 may be arranged on or in the housing 2 of the face recognition device 1 in a way that it is accessible from the outside like this is shown in Fig. 1. But the switch 7 may also be arranged within the housing 2 so that it is only accessible when the housing 2 is opened. In a further advantageous embodiment, the housing 2 is secured by means of a tamper contact. In case the housing 2 is opened by unauthorized persons, an alarm is output (in particular an alarm message is sent) by the face recognition device 1.

It should be noted that the switch 7 can also be arranged in a line necessary for data communication for the third data interface function 6c. In this case, the technical teaching presented hereinbefore in view of switching the first data interface function 6a can be applied to the third data interface function 6c in an equal way.

Although the above embodiments with respect to the hardware switch 7 are advantageous, the operating mode of the face recognition device 1 and/or the functional state of the first data interface function 6a and/or the functional state of the third data interface function 6c may also be changed remotely, for example by sending a corresponding command to the face recognition device 1 by means of wired or wireless communication.

It should also be noted that to provide privacy, image data can be processed exclusively within the face recognition device 1 in identification mode, in particular within the housing 2 of the face recognition device 1, whereas image data may leave the face recognition device 1 in training mode.

In the above example, the memory 5 for the face model data is located within in the processor 4. However, it is also possible that the memory 5 is located outside of the processor 4 and is connected thereto.

Moreover, the data interface 6 is located outside of the processor 4 and connected thereto in the above example. Nonetheless, it is possible to integrate the data interface 6 into the processor 4.

It should also be noted that two or more data interface functions 6a..6c may be functional parts of a single hardware section of the data interface 6, or each data interface function 6a..6c may be embodied as a separate hardware section of the data interface 6.

Fig. 2 shows a typical application of the face recognition device 1. In detail, four face recognition devices 1a..1d are fixedly installed in different rooms of a building 8, which wirelessly communicate with a central control 9. If a person gets into the capturing range of a face recognition device 1a..1d, the face recognition device 1a..1d starts a face recognition process to identify the captured person. In turn, the identity linked to the recognized face F is communicated to the central control 9, which can provide data to a user indicating which person is in which room or simply can count persons entering and leaving a room. Additionally, the central control 9 may be used to administer the face recognition device 1a..1d what in particular means that face model data is uploaded to the face recognition device 1a..1d once, on demand or on a regular basis.

In particular, the identity sent from a face recognition device 1a..1d to the central control 9 can be encrypted or can be an intermediate identity (e.g. an ID-number or an ID-symbol). In this case, (just) the central control 9 has the information, which is necessary to obtain the real identity of the detected person. If the identity is sent in encrypted form, the central control 9 has the key to decrypt the identity received by the face recognition device 1a..1d. If an intermediate identity is sent by the face recognition device 1a..1d, the central control 9 comprises a database or table, which links the intermediate identity to the real identity of the detected person. So, neither the face recognition device 1a..1d, nor the central control 9 has information about the face F and the linked real identity what makes the system particularly safe because a hacker had to hack both the face recognition device 1a..1d and the central control 9 to obtain the link between the face F and the linked real identity what is improbable.

In a further embodiment, an intermediate identity is sent by the face recognition device 1a..1d in encrypted form. In this case, the central control 9 can decrypt the encrypted intermediate identity and send the plain intermediate identity to another receiving device (not shown), which has the link between the intermediate identity and the real identity. Alternatively, the central control 9 can have the link between the encrypted intermediate identity and the encrypted real identity. If so, the encrypted real identity is sent by the central control 9, which is decrypted in another receiving device (not shown). In both cases, the real identity of a detected person is unveiled just at the end of the chain what makes abusive attempts very complicated.

To allow for an easy installation of the face recognition devices 1a..1d, the housing 2 of each face recognition device 1a..1d has a volume of less than 2.000 cm³.

Summarizing, the invention addresses privacy concerns in the technical field of face recognition, in particular in public or semi-public (e.g. in premises) but also in home automation systems. For this reason, the process of face recognition is done locally at the edge of the network, i.e. within the face recognition devices 1a..1d. Beneficially, image data is not stored at all or discarded as soon as possible. Attempts from the outside can be foiled by restricting data access via the data interface 6 and in addition by using proprietary transmission protocols. Thus, the invention in particular provides a face recognition device 1, which in view of the functions necessary for face recognition is self-contained and because of its closed shell can safely be operated in a space, which is highly vulnerable for hacker attacks.

In reality, the face recognition devices 1, 1a..1d and the building 8 may have more or less parts than shown in the figures. The face recognition devices 1, 1a..1d and the building 8 and parts thereof may also be shown in different scales and may be bigger or smaller than depicted. Finally, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### LIST OF REFERENCE NUMERALS

- 1, 1a..1d: face recognition device
- 2: housing
- 3: camera
- 4: processor
- 5: memory
- 6: data interface
- 6a..6c: data interface function
- 7: switch
- 8: building
- 9: central control
- F: face

## Claims

1. Face recognition device (1, 1a..1d), comprising
- a housing (2),
- a camera (3) within the housing (2),
- a processor (4) within the housing (2), which is connected to the camera (3) and which is capable of running a face recognition process based on face model data stored in a memory (5) in the processor (4) or in a memory (5) connected to the processor (4) and based on image data captured by the camera (3),
- a data interface (6) within the housing (2), which is connected to the processor (4) or which is part of the processor (4) and of which a first data interface function (6a) is provided for retrieving said face model data and of which a second data interface function (6b) is provided for transmitting identity information associated with the recognized face (F), wherein the identity information comprises an indication of an identity and does not comprise image data captured by the camera,
wherein
A) the first data interface function (6a) is a pure write function without providing read access from outside of the face recognition device (1, 1a..1d) or can be switched on and off via actuation of a physical hardware switch (7), and
B1) the data interface (6) is permanently disconnected from the camera (3) and any memory (5) for storing the image data such that the image data from the camera cannot be transmitted via the data interface (6), or
B2) the data interface (6) comprises a third data interface function (6c), which provides read access to the camera (3) or to a memory (5) for storing image data captured by the camera (3) and which can be switched on and off via actuation of the physical hardware switch (7) such that image data can only be transmitted when the physical hardware switch (7) is switched on.

2. Face recognition device (1, 1a..1d) as claimed in claim 1, **characterized in that** a control line of the data interface (6) and/or a data line of the data interface (6) is physically closed in an ON-state of the physical hardware switch (7) and physically disconnected in an OFF-state of the physical hardware switch (7).

3. Face recognition device (1, 1a..1d) as claimed in any one of claims 1 to 2, **characterized in that** at least the second data interface function is (6b) based on a proprietary / non-standardized transmission protocol.

4. Face recognition device (1, 1a..1d) as claimed in any one of claims 1 to 3, **characterized in that** the housing (2) has a volume of less than 2.000 cm³.

5. Building (8), comprising a plurality of fixedly installed face recognition devices (1, 1a..1d) as claimed in any one of claims 1 to 5.

6. Method for recognizing faces (F) by means of a face recognition device (1, 1a..1d) according to any one of the claims 1 to 4, comprising the steps of
a) retrieving face model data by the first data interface function (6a),
b) capturing an image of a face (F) by the camera (3),
c) running a face recognition process based on the face model data and based on image data captured by the camera (3) in the processor (4) and
d) sending an identity associated with the recognized face (F) by the second data interface function (6b),
wherein
- steps b) and c) are performed within the face recognition device (1, 1a..1d).

7. Method as claimed in claim 6, **characterized in that** steps b) and c) are performed exclusively within the face recognition device (1, 1a..1d).

8. Method as claimed in claim 6 or 7, **characterized in that** step a) is executed in a training mode of the face recognition device (1, 1a..1d), whereas the steps b) to d) are executed in an identification mode of the face recognition device (1, 1a..1d), wherein
- in case that the first data interface function (6a) can be switched on and off, the first data interface function (6a) is switched on in the training mode and switched off in the identification mode and
- in case that the third data interface function (6c) can be switched on and off, the third data interface function (6c) is switched on in the training mode and switched off in the identification mode.

9. Method as claimed in any one of claims 6 to 8, **characterized in that** image data is discarded immediately after the face recognition process has been ended or immediately after the identity associated with the recognized face (F) has been sent.

10. Method as claimed in claim 9, **characterized in that** image data is discarded less than 1 second after the face recognition process has been ended or less than 1 second after the identity associated with the recognized face (F) has been sent.

11. Method as claimed in any one of claims 6 to 10, **characterized in that** a message related to an unknown identity is sent in case the face recognition process in step c) ends negatively.

12. Method as claimed in any one of claims 6 to 11, **characterized in that** the identity of a detected person is sent in encrypted form, or an intermediate identity associated with the recognized face but being different from the real identity is sent.

13. Method as claimed in any one of claims 6 to 12, **characterized in that** identity related data is the only data sent by the face recognition device (1, 1a..1d).

## Patentansprüche

1. Gesichtserkennungsvorrichtung (1, 1a..1d), umfassend
- ein Gehäuse (2),
- eine Kamera (3) innerhalb des Gehäuses (2),
- einen Prozessor (4) innerhalb des Gehäuses (2), der mit der Kamera (3) verbunden ist und der in der Lage ist, einen Gesichtserkennungsprozess basierend auf Gesichtsmodelldaten, die in einem Speicher (5) in dem Prozessor (4) oder in einem Speicher (5), der mit dem Prozessor (4) verbunden ist, gespeichert sind, und basierend auf Bilddaten, die durch die Kamera (3) erfasst werden, laufen zu lassen,
- eine Datenschnittstelle (6) innerhalb des Gehäuses (2), die mit dem Prozessor (4) verbunden ist oder die Teil des Prozessors (4) ist und von der eine erste Datenschnittstellenfunktion (6a) zum Abrufen der Gesichtsmodelldaten bereitgestellt ist und von der eine zweite Datenschnittstellenfunktion (6b) zum Übertragen von Identitätsinformationen assoziiert mit dem erkannten Gesicht (F) bereitgestellt ist, wobei die Identitätsinformationen eine Angabe einer Identität umfassen und keine Bilddaten umfassen, die durch die Kamera erfasst werden,
wobei
A) die erste Datenschnittstellenfunktion (6a) eine reine Schreibfunktion ist, ohne Lesezugriff von außerhalb der Gesichtserkennungsvorrichtung (1, 1a..1d) bereitzustellen, oder über Betätigung eines physischen Hardwareschalters (7) ein- und ausgeschaltet werden kann und
B1) die Datenschnittstelle (6) permanent von der Kamera (3) und einem beliebigen Speicher (5) zum Speichern der Bilddaten getrennt ist, sodass die Bilddaten von der Kamera nicht über die Datenschnittstelle (6) übertragen werden können, oder
B2) die Datenschnittstelle (6) eine dritte Datenschnittstellenfunktion (6c) umfasst, die Lesezugriff für die Kamera (3) oder für einen Speicher (5) zum Speichern von Bilddaten, die durch die Kamera (3) erfasst werden, bereitstellt und die über Betätigung des physischen Hardwareschalters (7) ein- und ausgeschaltet werden kann, sodass Bilddaten nur übertragen werden können, wenn der physische Hardwareschalter (7) eingeschaltet ist.

2. Gesichtserkennungsvorrichtung (1, 1a..1d) nach Anspruch 1, **dadurch gekennzeichnet, dass** eine Steuerleitung der Datenschnittstelle (6) und/oder eine Datenleitung der Datenschnittstelle (6) in einem EIN-Zustand des physischen Hardwareschalters (7) physisch geschlossen ist und in einem AUS-Zustand des physischen Hardwareschalters (7) physisch getrennt ist.

3. Gesichtserkennungsvorrichtung (1, 1a..1d) nach einem der Ansprüche 1 bis 2, **dadurch gekennzeichnet, dass** zumindest die zweite Datenschnittstellenfunktion (6b) auf einem proprietären / nicht standardisierten Übertragungsprotokoll basiert.

4. Gesichtserkennungsvorrichtung (1, 1a..1d) nach einem der Ansprüche 1 bis 3, **dadurch gekennzeichnet, dass** das Gehäuse (2) ein Volumen von weniger als 2.000 cm³ aufweist.

5. Gebäude (8), umfassend eine Vielzahl von fest installierten Gesichtserkennungsvorrichtungen (1, 1a..1d) nach einem der Ansprüche 1 bis 5.

6. Verfahren zum Erkennen von Gesichtern (F) mittels einer Gesichtserkennungsvorrichtung (1, 1a..1d) nach einem der Ansprüche 1 bis 4, umfassend die Schritte des
a) Abrufens von Gesichtsmodelldaten durch die erste Datenschnittstellenfunktion (6a),
b) Erfassens eines Bildes eines Gesichts (F) durch die Kamera (3),
c) Laufenlassens eines Gesichtserkennungsprozesses basierend auf den Gesichtsmodelldaten und basierend auf Bilddaten, die durch die Kamera (3) erfasst werden, in dem Prozessor (4), und
d) Sendens einer Identität assoziiert mit dem erkannten Gesicht (F) durch die zweite Datenschnittstellenfunktion (6b),
wobei
- Schritt b) und c) innerhalb der Gesichtserkennungsvorrichtung (1, 1a..1d) durchgeführt werden.

7. Verfahren nach Anspruch 6, **dadurch gekennzeichnet, dass** Schritt b) und c) ausschließlich innerhalb der Gesichtserkennungsvorrichtung (1, 1a..1d) durchgeführt werden.

8. Verfahren nach Anspruch 6 oder 7, **dadurch gekennzeichnet, dass** Schritt a) in einem Trainingsmodus der Gesichtserkennungsvorrichtung (1, 1a..1d) ausgeführt wird, während Schritt b) bis d) in einem Identifikationsmodus der Gesichtserkennungsvorrichtung (1, 1a..1d) ausgeführt werden,
wobei
- falls die erste Datenschnittstellenfunktion (6a) ein- und ausgeschaltet werden kann, die erste Datenschnittstellenfunktion (6a) in dem Trainingsmodus eingeschaltet und in dem Identifikationsmodus ausgeschaltet wird und
- falls die dritte Datenschnittstellenfunktion (6c) ein- und ausgeschaltet werden kann, die dritte Datenschnittstellenfunktion (6c) in dem Trainingsmodus eingeschaltet und in dem Identifikationsmodus ausgeschaltet wird.

9. Verfahren nach einem der Ansprüche 6 bis 8, **dadurch gekennzeichnet, dass** Bilddaten unmittelbar, nachdem der Gesichtserkennungsprozess beendet worden ist oder unmittelbar, nachdem die Identität assoziiert mit dem erkannten Gesicht (F) gesendet worden ist, verworfen werden.

10. Verfahren nach Anspruch 9, **dadurch gekennzeichnet, dass** Bilddaten weniger als 1 Sekunde, nachdem der Gesichtserkennungsprozess beendet worden ist, oder weniger als 1 Sekunde, nachdem die Identität assoziiert mit dem erkannten Gesicht (F) gesendet worden ist, verworfen werden.

11. Verfahren nach einem der Ansprüche 6 bis 10, **dadurch gekennzeichnet, dass** eine Nachricht in Bezug auf eine unbekannte Identität gesendet wird, falls der Gesichtserkennungsprozess in Schritt c) negativ endet.

12. Verfahren nach einem der Ansprüche 6 bis 11, **dadurch gekennzeichnet, dass** die Identität einer detektierten Person in verschlüsselter Form gesendet wird oder eine Zwischenidentität assoziiert mit dem erkannten Gesicht, die sich aber von der realen Identität unterscheidet, gesendet wird.

13. Verfahren nach einem der Ansprüche 6 bis 12, **dadurch gekennzeichnet, dass** identitätsbezogene Daten die einzigen Daten sind, die durch die Gesichtserkennungsvorrichtung (1, 1a..1d) gesendet werden.

## Revendications

1. Dispositif de reconnaissance faciale (1, 1a.. 1d), comprenant
- un boîtier (2),
- une caméra (3) à l'intérieur du boîtier (2),
- un processeur (4) à l'intérieur du boîtier (2), qui est connecté à la caméra (3) et qui est capable d'exécuter un processus de reconnaissance faciale sur la base de données de modèle de visage stockées dans une mémoire (5) dans le processeur (4) ou dans une mémoire (5) connectée au processeur (4) et sur la base de données d'image capturées par la caméra (3),
- une interface de données (6) à l'intérieur du boîtier (2), qui est connectée au processeur (4) ou qui fait partie du processeur (4) et dont une première fonction d'interface de données (6a) est prévue pour récupérer lesdites données de modèle de visage et dont une deuxième fonction d'interface de données (6b) est prévue pour transmettre des informations d'identité associées au visage reconnu (F), dans lequel les informations d'identité comprennent une indication d'une identité et ne comprennent pas de données d'image capturées par la caméra, dans lequel
A) la première fonction d'interface de données (6a) est une fonction d'écriture pure qui ne donne pas d'accès en lecture depuis l'extérieur du dispositif de reconnaissance faciale (1, 1a.. 1d) ou peut être mise en marche et arrêtée via l'actionnement d'un commutateur matériel physique (7), et
B1) l'interface de données (6) est déconnectée en permanence de la caméra (3) et de toute mémoire (5) destinée à stocker les données d'image de sorte que les données d'image provenant de la caméra ne peuvent pas être transmises via l'interface de données (6), ou
B2), l'interface de données (6) comprend une troisième fonction d'interface de données (6c), qui donne un accès en lecture à la caméra (3) ou à une mémoire (5) destinée à stocker des données d'image capturées par la caméra (3) et qui peut être mise en marche et arrêtée via l'actionnement du commutateur matériel physique (7) de sorte que les données d'image ne peuvent être transmises que lorsque le commutateur matériel physique (7) est mis en marche.

2. Dispositif de reconnaissance faciale (1, 1a.. 1d) selon la revendication 1, **caractérisé en ce qu'**une ligne de commande de l'interface de données (6) et/ou une ligne de données de l'interface de données (6) est physiquement fermée dans un état de MARCHE du commutateur matériel physique (7) et physiquement déconnectée dans un état d'ARRÊT du commutateur matériel physique (7).

3. Dispositif de reconnaissance faciale (1, 1a.. 1d) selon l'une quelconque des revendications 1 à 2, **caractérisé en ce qu'**au moins la deuxième fonction d'interface de données (6b) est basée sur un protocole de transmission non normalisé / propriétaire.

4. Dispositif de reconnaissance faciale (1, 1a.. 1d) selon l'une quelconque des revendications 1 à 3, **caractérisé en ce que** le boîtier (2) a un volume inférieur à 2,000 cm³.

5. Bâtiment (8), comprenant une pluralité de dispositifs de reconnaissance faciale (1, 1a.. 1d) selon l'une quelconque des revendications 1 à 5, installés de manière fixe.

6. Procédé permettant la reconnaissance de visages (F) au moyen du dispositif de reconnaissance faciale (1, 1a.. 1d) selon l'une quelconque des revendications 1 à 4, comprenant les étapes de
a) récupération de données de modèle de visage par la première fonction d'interface de données (6a),
b) capture d'une image d'un visage (F) par la caméra (3),
c) exécution d'un processus de reconnaissance faciale sur la base des données de modèle de visage et sur la base de données d'image capturées par la caméra (3) dans le processeur (4) et
d) envoi d'une identité associée au visage reconnu (F) par la deuxième fonction d'interface de données (6b), dans lequel
les étapes b) et c) sont effectuées dans le dispositif de reconnaissance faciale (1, 1a.. 1d).

7. Procédé selon la revendication 6, **caractérisé en ce que** les étapes b) et c) sont effectuées exclusivement dans le dispositif de reconnaissance faciale (1, 1a.. 1d).

8. Procédé selon la revendication 6 ou 7, **caractérisé en ce que** l'étape a) est exécutée dans un mode d'entraînement du dispositif de reconnaissance faciale (1, 1a.. 1d), tandis que les étapes b) à d) sont exécutées dans un mode d'identification du dispositif de reconnaissance faciale (1, 1a.. 1d), dans lequel
- dans le cas où la première fonction d'interface de données (6a) peut être mise en marche et arrêtée, la première fonction d'interface de données (6a) est mise en marche en mode d'entraînement et arrêtée en mode d'identification et
- dans le cas où la troisième fonction d'interface de données (6c) peut être mise en marche et arrêtée, la troisième fonction d'interface de données (6c) est mise en marche en mode d'entraînement et arrêtée en mode d'identification.

9. Procédé selon l'une quelconque des revendications 6 à 8, **caractérisé en ce que** les données d'image sont éliminées immédiatement après la fin du processus de reconnaissance faciale ou immédiatement après l'envoi de l'identité associée au visage reconnu (F).

10. Procédé selon la revendication 9, **caractérisé en ce que** les données d'image sont éliminées moins d'1 seconde après la fin du processus de reconnaissance faciale ou moins d'1 seconde après l'envoi de l'identité associée au visage reconnu (F).

11. Procédé selon l'une quelconque des revendications 6 à 10, **caractérisé en ce qu'**un message lié à une identité inconnue est envoyé dans le cas où le processus de reconnaissance faciale à l'étape c) se termine négativement.

12. Procédé selon l'une quelconque des revendications 6 à 11, **caractérisé en ce que** l'identité d'une personne détectée est envoyée sous forme cryptée, ou une identité intermédiaire associée au visage reconnu mais différente de l'identité réelle est envoyée.

13. Procédé selon l'une quelconque des revendications 6 à 12, **caractérisé en ce que** les données liées à l'identité sont les seules données envoyées par le dispositif de reconnaissance faciale (1, 1a.. 1d).
